# EUROPÄISCHE PATENTSCHRIFT

(11) **EP 0 589 432 B1**
(45) Veröffentlichungstag und Bekanntmachung des Hinweises auf die Patenterteilung: **23.08.1995**
(21) Anmeldenummer: 93115272.2
(22) Anmeldetag: 22.09.1993
(51) Int. Cl.: C01F 7/02

(54) **Verfahren zur Herstellung eines Aluminiumhydroxids Al(OH)3 mit abgerundeter Kornoberfläche**
Process for the preparation of aluminium hydroxyde Al(OH)3 with a rounded grain surface
Procédé de préparation d'un hydroxyde d'aluminium Al(OH)3 avec une surface de grain arrondie

(30) Priorität: 23.09.1992 DE 4231874
(43) Veröffentlichungstag der Anmeldung: 30.03.1994
(73) Patentinhaber: MARTINSWERK G.m.b.H., für chemische und metallurgische Produktion, D-50127 Bergheim (DE)
(72) Erfinder: Brown, Neil, Dr., D-50127 Bergheim/Erft (DE); van Peij, Detlef, D-50181 Bedburg (DE)
(74) Vertreter: Weinhold, Peter, Dr.

(56) Entgegenhaltungen:
- EP-A- 0 011 667
- EP-A- 0 407 595

## Beschreibung

Die Erfindung betrifft ein neues Verfahren zur Herstellung eines Aluminiumhydroxids (Al(OH)₃) mit abgerundeter Kornoberfläche sowie flammgeschützte Kunststoffmassen, welche Al(OH)₃ als Füllstoff enthalten.

Aluminiumhydroxid ist ein seit langem bekannter Füllstoff zur Flammfestausrüstung von polymeren Werkstoffen. Hauptsächlich wird das aus dem Bayer-Prozess anfallende Al(OH)₃ direkt oder gegebenenfalls nach einem Mahlvorgang als Füllstoff eingesetzt. Die Kornoberflächen dieser Hydroxide sind aber sehr unregelmässig, scharfkantig und zerklüftet und bewirken dadurch eine rauhe Oberfläche bei den entsprechend ausgerüsteten Kunststoffformkörpern.
Bei der Einarbeitung von gemahlenem Bayer-Al(OH)₃ in Kunststoff beobachtete man auch unvorhersehbare Viskositätsschwankungen, die erhebliche Probleme bei der Fertigung aufwarfen.
Um diesen Schwierigkeiten zu begegnen, hat man darauf versucht, die Oberfläche der Al(OH)₃-Teilchen mit Silanen zu beschichten (DE-PS 27 43 682).
Neben dem zusätzlichen Aufwand und den zusätzlichen Kosten, die durch die separate Beschichtung entstehen, sind die Verarbeitungseigenschaften des solcherart behandelten Al(OH)₃ nach wie vor unbefriedigend.

Gemäss EP-PS 011 667 wurde dann versucht, das aus dem Bayer-Prozess resultierende Al(OH)₃, welches als Agglomerat von Einzelkristallen vorliegt, in eine erhitzte,an Aluminium untersättigte Bayer-Lauge zu überführen und über 1 bis 25 h zu rühren, worauf der Feststoff abgetrennt wird. Die ursprünglichen Agglomerate werden durch diese Behandlung an ihren Korngrenzen getrennt. Die einzelnen Primärkristalle erfahren dadurch eine Abrundung. Das resultierende abgerundete Al(OH)₃ weist zudem praktisch keinen Feinkornanteil auf.
Dieses Al(OH)₃ zeigt ein sehr gutes Viskositätsverhalten im Kunststoff, die resultierenden Oberflächen der gefüllten Kunststoffformkörper sind zudem glatt.
Ein beträchtlicher Nachteil besteht bei diesem Verfahren aber darin, dass im ursprünglichen Bayer-Al(OH)₃ eingeschlossene Verunreinigungen sich auf dem resultierenden Al(OH)₃ niederschlagen, was bei der Anwendung in ungesättigten Polyesterharzen (UP-Harzen) zu Verfärbungen führt.

Gemäss EP-A 407 595 wurde vorgeschlagen, die aus dem Bayer-Prozess stammenden Al(OH)₃-Aggregate physikalisch,z.B. durch Zentrifugieren oder durch Mahlen in einer Kugelmühle,zu desagglomerieren.
Durch die physikalische Behandlung treten aber Verletzungen der Kornoberflächen auf, die sich nachteilig auf die Verarbeitungseigenschaften im Kunststoff auswirken. Ausserdem ist eine solche Behandlung mit einem erheblichen Aufwand verbunden.

Die Aufgabe bestand folglich darin, ein Verfahren zu entwickeln, das diese Nachteile der bekannten Verfahren ausschliesst und mit dem man in der Lage ist, ein Al(OH)₃ mit abgerundeter Oberfläche zur Verfügung zu stellen, das ausgezeichnete Verarbeitungseigenschaften im Kunststoff aufweist.

Diese Aufgabe wurde gelöst mit einem Verfahren nach Anspruch 1.

Um das im erfindungsgemässen Verfahren eingesetzte Al(OH)₃ zu erhalten, wird ein aus dem Bayer-Prozess stammendes Al(OH)₃ auf fachmännisch übliche Weise,z.B. in einer Kugelmühle,aufgemahlen und mit einer geeigneten Siebvorrichtung klassiert.

Dieses Bayer-Al(OH)₃ liegt ursprünglich als Agglomerat mit einer Teilchengrösse im 50%-Bereich d₅₀ von 30 »m bis 100 »m, üblicherweise von 50 bis 70 »m,vor. Entsprechend weisen die Primärkristalle eine Teilchengrösse im 50%-Bereich d₅₀ von 2 bis 25 »m,zweckmässig von 5 bis 25 »m,auf. Die spezifische Oberfläche nach BET liegt zweckmässig zwischen 0,1 m²/g und 0,5 m²/g, woraus sich eine Oberflächenrauhigkeit von 2 bis 6 ergibt (ausgedrückt als Quotient der gemessenen spezifischen Oberfläche nach BET und der berechneten Oberfläche unter Annahme der idealen Kugelform der Partikel).

Die Mahlung und Klassierung des Bayer-Al(OH)₃ wird so durchgeführt, dass ein Al(OH)₃ mit folgenden Spezifikationen resultiert:
Korndurchmesser im 50%-Bereich d₅₀ von 5 »m bis 25 »m,
Korndurchmesser im 10%-Bereich d₁₀ von 1,0 »m bis 4,5 »m,
Korndurchmesser im 90%-Bereich d₉₀ von 10 »m bis 50 »m,
Spezifische Oberfläche nach BET 1 m²/g bis 3 m²/g,
Oberflächenrauhigkeit von 2 bis 6.

Mit diesem gemahlenen und klassierten Al(OH)₃ wird erfindungsgemäss eine aus dem Bayer-Verfahren gewonnene Lauge, welche ein Molverhältnis Na₂O zu Al₂O₃ von 2,0 bis 2,3 aufweist,angeimpft.
Eine Lauge mit geeigneter Zusammensetzung kann beispielsweise dadurch erhalten werden, dass man eine aus dem Bayer-Prozess stammende Klarlauge (K-Lauge) von ca. 95°C, welche einen Na₂O-Gehalt von ca. 140 g/l und einen Al₂O₃-Gehalt von 150 g/l aufweist,mit einer nach der Auskristallisation des Al(OH)₃ erhaltenen sogenannten P-Lauge von z.B. 45°C, welche einen Na₂O-Gehalt von ca. 150 g/l und einen Al₂O₃-Gehalt von ca. 85 g/l aufweist,zu gleichen Teilen mischt.

Abhängig von dem jeweiligen Mischverhältnis hat die gewonnene Lauge eine Temperatur von 45°C bis 95°C.
Vorzugsweise wird das Impfmaterial bei einer Temperatur der Lauge von 60 bis 75°C zugegeben.
Die Menge an Impfmaterial hängt von der gewünschten Kornverteilung im gewünschten Produkt ab.
Zweckmässig wird das Impfmaterial in einer Menge von 25 bis 500 g/l, vorzugsweise in einer Menge von 50 bis 150 g/l,eingesetzt.

Nach Zugabe des Impfmaterials wird die Suspension ausgerührt, wobei dies bei konstanter Temperatur, durch regelmässige Abkühlung oder durch Abkühlung nach einem bestimmten Temperaturprofil erfolgen kann.
Zweckmässig erfolgt das Ausrühren solange,bis sich ein Molverhältnis Na₂O zu Al₂O₃ von 2,6 bis 3,1 eingestellt hat. In der Regel dauert dieser Vorgang 24 h bis 60 h.

Die nach dem Ausrühren erhaltene Suspension wird auf fachmännisch übliche Weise filtriert.
Das resultierende Al(OH)₃ zeichnet sich durch folgende Eigenschaften aus:
Korndurchmesser im 50%-Bereich d₅₀ von 5 »m bis 25 »m,
Korndurchmesser im 10%-Bereich d₁₀ von 1,0 »m bis 4,5 »m,
Korndurchmesser im 90%-Bereich d₉₀ von 10 »m bis 50 »m,
Spezifische Oberfläche nach BET von 0,3 m²/g bis 1,3 m²/g,
Oberflächenrauhigkeit von 1,1 bis 1,5.

Dieses nach dem erfindungsgemässen Verfahren hergestellte Al(OH)₃ kann aufgrund seines ausgezeichneten Viskositätsverhaltens problemlos in Kunststoffe, vorzugsweise in Duroplaste, wie z.B. in ungesättigte Polyesterharze (UP-Harze), eingearbeitet werden. Es können damit ausserordentlich hohe Füllgrade bei sehr gutem Eigenschaftsprofil der gefüllten Kunststoffe erreicht werden. Die Oberfläche entsprechend hergestellter Formkörper ist glatt. Nachfolgende Beispiele sollen die Erfindung verdeutlichen.

### Beispiel 1

In einem Rührwerkszersetzer (8 m³ Kapazität) wurden P-Lauge von 45°C mit einem Na₂O-Gehalt von 145 g/l und einem Al₂O₃-Gehalt von 88 g/l mit K-Lauge von 75°C mit einem Na₂O-Gehalt von 139 g/l und einem Al₂O₃-Gehalt von 155 g/l vermischt , wobei 5 m³ einer Mischlauge mit einem Molverhältnis Na₂O zu Al₂O₃ von 2,01 resultierten.Diese Mischlauge wurde auf ≃ 70°C erhitzt und mit 50 kg/m³ eines gemahlenen Bayer-Al(OH)₃ mit d₅₀ 9 - 13 »m, d₁₀ 1,5 »m, d₉₀ 19 »m und einer spez. Oberfläche nach BET von 2,21 m²/g als Impfstoff versetzt. Die sich dabei einstellende Temperatur betrug 67°C.
Der Ausrührprozess wurde nun nach folgendem Temperaturprofil gefahren: von 67°C auf 60°C in 12 h gekühlt, danach 36 h bei dieser Temperatur gerührt. Nach dieser Ausrührzeit stellte sich ein Molverhältnis Na₂O zu Al₂O₃ von 2,96 ein, welches einer Al₂O₃-Ausbeute von 37 kg/m³ entspricht. Die Gesamtproduktausbeute dieses Ausrührprozesses (inklusive der Impfstoffmenge) betrug 540 kg Aluminiumhydroxid. Die ausgerührte Suspension wurde über einen Bandfilter (≃ 15 m² Filterfläche) filtriert und das Feucht-Aluminiumhydroxid über einen Kontakttrockner getrocknet.
Das resultierende Al(OH)₃ wies einen Korndurchmesser im 50% Bereich von 8,7»m, im 10% Bereich von 1,6»m, im 90% Bereich von 19»m,eine spezifische Oberfläche nach BET von 1,18 m²/g und eine Oberflächenrauhigkeit von 1,31 auf.
Die Viskosität des a) Ausgangsproduktes, b) des erfindungsgemäss nach Beispiel 1 erhaltenen Al(OH)₃ und c) des gemäss dem Verfahren der EP-PS 011 667 erhaltenen Produktes (Apyral 4 der Vereinigten Aluminium Werke) als Vergleich, wurden in einem Acrylharz (Modar 826 HT, ICI Acrylix) getestet.
- Messbedingungen:: 170 Teile Al(OH)₃ pro 100 Teile Harz, Brookfield HBT Viskosimeter, Spindel 2, 50 rpm, 20°C
- Resultat:: a) 4000 mPaS
b) 2400 mPaS (Erfindung)
c) 2600 mPaS (Vergleich)
Der Vergleich des Weissegrads zwischen Produkt b) und c), gemessen nach DIN 53163 (Erepho, 475 nm, Standard BaS04) zeigt für
b) 91,0% (Erfindung)
c) 86,2% (Vergleich)

### Beispiel 2

In einem Rührwerkszersetzer (8 m³ Kapazität) wurden P-Lauge von 48°C mit einem Na₂O-Gehalt von 152 g/l und einem Al₂O₃-Gehalt von 78 g/l mit K-Lauge von 82°C mit einem Na₂O-Gehalt von 144 g/l und einem Al₂O₃-Gehalt von 164 g/l vermischt, wobei 5 m³ einer Mischlauge mit einem Molverhältnis Na₂O zu Al₂O₃ von 2,02 resultierten.Diese Mischlauge wurde auf ≃ 63°C erhitzt und mit 150 kg/m³ eines gemahlenen Bayer-Al(OH)₃, d₅₀ 9 - 13 »m, d₁₀ 15»m, d₉₀ 19»m und einer spez. Oberfläche nach BET von 2,21 m²/g,als Impfstoff versetzt, wobei die sich dabei einstellende Temperatur 60°C betrug.
Der Ausrührprozess wurde bei gleichbleibender Temperatur von 60°C während 48 h gefahren. Nach dieser Ausrührzeit stellte sich ein Molverhältnis Na₂O zu Al₂O₃ von 3,1 ein, welches einer Al₂O₃-Ausbeute von 37 kg/m³ entspricht. Die Gesamtproduktausbeute dieses Ausrührprozesses (inklusive der Impfstoffmenge) betrug 1063 kg Aluminiumhydroxid. Die ausgerührte Suspension wurde über einen Bandfilter (≃ 15 m² Filterfläche) filtriert und das Feucht-Aluminiumhydroxid über einen Kontakttrockner getrocknet.

Das resultierende Al(OH)₃ wies einen Korndurchmesser im 50% Bereich von 6,8 »m, im 10% Bereich von 1,5 »m, im 90% Bereich von 15»m,eine spezifische Oberfläche nach BET von 1,21 m²/g und eine Oberflächenrauhigkeit von 1,2 auf.

Entsprechend Beispiel 1 wurde die Viskosität gemessen.
- Resultat:: a) 4000 mPaS
b) 1600 mPaS (Erfindung)
c) 2600 mPas (Vergleich)

### Beispiel 3

In einem Labor-Rührwerkszersetzer (10 l Kapazität) wurden P-Lauge von 42°C mit einem Na₂O-Gehalt von 148 g/l und einem Al₂O₃ Gehalt von 101 g/l mit K-Lauge von 79°C mit einem Na₂O-Gehalt von 138 g/l und einem Al₂O₃-Gehalt von 154 g/l vermischt, wobei 8 l einer Mischlauge mit einem Molverhältnis Na₂O zu Al₂O₃ von 2,04 resultierten.Diese Mischlauge wurde auf ca. 70°C erhitzt und mit 100 g/l eines gemahlenen Bayer-Al(OH)₃,mit d₅₀ 8,26 »m, d₁₀ 1,41 »m, d₉₀ 19,8»m, einer spez. Oberfläche nach BET von 2,03 m²/g und einer Oberflächenrauhigkeit von 2,44, als Impfstoff versetzt, wobei die sich einstellende Temperatur 67°C betrug. Der Ausrührprozess wurde nach folgendem Temperaturprofil gefahren: auf 60°C in 24 h gekühlt, danach 26 h bei dieser Temperatur gerührt; nach dieser Ausrührzeit stellte sich ein Molverhältnis Na₂O zu Al₂O₃ von 2,78 ein, welches einer Al₂O₃-Ausbeute von 33,5 kg/m³ entspricht. Die Gesamtproduktausbeute (inklusive der Impfstoffmenge) betrug 1,21 kg Aluminiumhydroxid. Die ausgerührte Suspension wurde über eine Labornutsche (ca. 500 cm²) filtriert und in einem Trockenschrank bei 105°C getrocknet. Das resultierende Al(OH)₃ wies einen Korndurchmesser im 50% Bereich von 8,14 »m, im 10% Bereich von 1,6 »m, im 90% Bereich von 19,6 »m, eine spez. Oberfläche nach BET von 0,89 m²/g und eine Oberflächenrauhigkeit von 1,21 auf.

Die Viskosität des Ausgangsproduktes a) und des b) gemäss Beispiel 3 erhaltenen Produktes wurde in einem ungesättigten Polyesterharz (Synolite W20, DSM) getestet.
- Messbedingungen:: 175 Teile Al(OH)₃ pro 100 Teile Harz, Brookfield HBT Viskosimeter, Spindel 3, 5 rpm, 23°C.
- Resultat:: a) 141,6 PaS
b) 57,3 PaS

## Patentansprüche

1. Verfahren zur Herstellung eines Aluminiumhydroxids Al(OH)₃ mit abgerundeter Kornoberfläche, dadurch gekennzeichnet, dass eine aus dem Bayer-Prozess gewonnene Lauge, welche ein Molverhältnis Na₂O zu Al₂O₃ von 2,0 bis 2,3 aufweist, mit einem Aluminiumhydroxid,welches einen Korndurchmesser im 50%-Bereich d₅₀ von 5 »m bis 25 »m, im 90%-Bereich d₉₀ von 10 »m bis 50 »m, im 10%-Bereich d₁₀ von 1,0 »m bis 4,5 »m,aufweist, angeimpftund danach ausgerührt wird, und anschliessend der erhaltene Feststoff abfiltriert wird.

2. Verfahren nach Patentanspruch 1, dadurch gekennzeichnet, dass das zur Impfung eingesetzte Aluminiumhydroxid durch Mahlung und anschliessende Klassierung eines aus dem Bayer-Prozess stammenden Aluminiumhydroxids, welches einen Korndurchmesser im 50%-Bereich d₅₀ von 30 »m bis 100 »m aufweist, und aus Primärkristallen,welche einen Korndurchmesser im 50%-Bereich von 5 bis 25 »m aufweisen, besteht, erhalten wird.

3. Verfahren nach Patentanspruch 1 oder 2, dadurch gekennzeichnet, dass bei einer Temperatur der Lauge zwischen 60°C und 75°C das Impfmaterial zugegeben wird.

4. Verfahren nach einem der Patentansprüche 1 bis 3, dadurch gekennzeichnet, dass das Impfmaterial in einer Menge von 25 bis 500 g/l zugegeben wird.

5. Verfahren nach einem der Patentansprüche 1 bis 4, dadurch gekennzeichnet, dass nach der Animpfung das Ausrühren so lange erfolgt, bis sich ein Molverhältnis Na₂O zu Al₂O₃ von 2,6 bis 3,1 eingestellt hat.

6. Aluminiumhydroxid mit abgerundeter Kornoberfläche mit einem Korndurchmesser im 50%-Bereich d₅₀ von 5 »m bis 25 »m, im 90%-Bereich d₉₀ von 10 »m bis 50 »m und im 10%-Bereich d₁₀ von 1,0 »m bis 4,5 »m, einer BET-Oberfläche von 0,3 m²/g bis 1,3 m²/g und einem Oberflächenrauhigkeitskoeffizient von 1,1 bis 1,5,hergestellt nach einem Verfahren nach den Patentansprüchen 1 bis 5.

7. Kunststoffmasse, Formmasse oder Formkörper auf Basis polymerer Stoffe, enthaltend Aluminiumhydroxid mit abgerundeter Kornoberfläche gemäss Anspruch 6.

8. Verwendung eines Aluminiumhydroxids gemäss Patentanspruch 6 als flammhemmender Füllstoff in Polymeren.

## Claims

1. Process for the preparation of aluminium hydroxide Al(OH)₃ with a rounded grain surface, characterized in that a liquor obtained from the Bayer process having a molar ratio of Na₂O to Al₂O₃ of from 2.0 to 2.3, is seeded with an aluminium hydroxide having a grain diameter in the 50%-range d₅₀ of from 5 »m to 25 »m, in the 90%-range d₉₀ of from 10 »m to 50 »m and in the 10%-range d₁₀ of from 1.0 »m to 4.5 »m, then the liquor is stirred under precipitation and thereafter the obtained solid is filtered off.

2. Process according to patent claim 1, characterized in that the aluminium hydroxide used for the seeding is obtained by grinding and subsequent classification of aluminium hydroxide which comes from the Bayer process, having a grain diameter in the 50%-range d₅₀ of from 30 »m to 100 »m, and consists of primary cristals having a grain diameter in the 50%-range of from 5 to 25 »m.

3. Process according to patent claim 1 or 2, characterized in that the seeding material is added at a temperature of the liquor between 60°C and 75°C.

4. Process according to any one of the patent claims 1 to 3, characterized in that the seeding material is added in an amount of from 25 to 500 g/l.

5. Process according to any one of the claims 1 to 4, characterized in that the stirring after the seeding is carried out until the molar ratio of Na₂O to Al₂O₃ is adjusted to a value of from 2.6 to 3.1.

6. Aluminium hydroxide having a rounded grain surface and a grain diameter in the 50%-range d₅₀ of from 5 »m to 25 »m, in the 90%-range d₉₀ of from 10 »m to 50 »m, and in the 10%-range d₁₀ of from 1.0 »m to 4.5 »m, a BET-surface of from 0.3 m²/g to 1.3 m²/g and a roughness coefficient of the surface of from 1.1 to 1.5, prepared by a process according to any one of the patent claims 1 to 5.

7. Plastic material, molding composition or molded articles on the basis of polymer materials containing aluminium hydroxide with a rounded grain surface according to claim 6.

8. The use of aluminium hydroxide according to patent claim 6 as fire retarding additive in polymers.

## Revendications

1. Procédé de préparation d'un hydroxyde d'aluminium Al(OH)₃ avec une surface de grain arrondie, caractérisé en ce qu'une liqueur obtenue à partir du procédé Bayer présentant un rapport molaire de Na₂0 à Al₂O₃ de 2,0 à 2,3 est ensemencée avec un hydroxyde d'aluminium qui présente un diamètre de grain de 5 à 25 »m dans l'intervalle de 50% d₅₀, de 10 »m à 50 »m dans l'intervalle de 90% d₉₀, de 1,0 »m à 4,5 »m dans l'intervalle de 10% d₁₀ et est ensuite séparée par agitation et que la matière solide obtenue est aussitôt séparée par filtration.

2. Procédé selon la revendication 1, caractérisé en ce que l'hydroxyde d'aluminium mis en oeuvre pour l'ensemencement est obtenu par broyage et classification subséquente d'un hydroxyde d'aluminium provenant du procédé Bayer qui présente un diamètre de grain de 30 »m à 100 »m dans l'intervalle de 50% d₅₀ et est constitué par des cristaux primaires présentant un diamètre de grain de 5 à 25 »m dans l'intervalle de 50%.

3. Procédé selon la revendication 1 ou 2, caractérisé en ce que l'amorce est ajoutée à une température de la liqueur comprise entre 60°C et 75°C.

4. Procédé selon l'une des revendications 1 à 3, caractérisé en ce que l'amorce est ajoutée en une quantité de 25 à 500 g/l.

5. Procédé selon l'une des revendications 1 à 4, caractérisé en ce que, après l'ensemencement, la séparation par agitation a lieu jusqu'à établissement d'un rapport molaire de Na₂0 à Al₂O₃ de 2,6 à 3,1.

6. Hydroxyde d'aluminium avec une surface de grain arrondie ayant un diamètre de grain de 5 »m à 25 »m dans l'intervalle de 50% d₅₀_{,} de 10 »m à 50 »m dans l'intervalle de 90% d₉₀, de 1,0 »m à 4,5 »m dans l'intervalle de 10% d₁₀, une aire BET de 0,3 m²/g à 1,3 m²/g et un coefficient de rugosité de surface de 1,1 à 1,5, préparé selon un procédé conforme aux revendications 1 à 5.

7. Composition plastique, matière à mouler ou corps moulé à base de matières polymères contenant de l'hydroxyde d'aluminium avec une surface de grain arrondie selon la revendication 6.

8. Utilisation d'un hydroxyde d'aluminium selon la revendication 6 en tant que charge retardatrice de la flamme dans des polymères.
